# EUROPEAN PATENT APPLICATION

(11) **EP 0 949 461 A2**
(43) Date of publication of application: **13.10.1999**
(21) Application number: 99106193.8
(22) Date of filing: 09.04.1999
(51) Int. Cl.: F25B 5/02, F25B 41/06, F25B 21/02

(54) **Controlling refrigerant in a closed loop recirculating system**

(30) Priority: 09.04.1998 US 57319
(71) Applicant: EATON CORPORATION, Cleveland, Ohio 44114-2584 (US)
(72) Inventor: Torrence, Robert James, Sanford, North Carolina 27330 (US)
(74) Representative: Wagner, Karl H., Dipl.-Ing.

(57) **Abstract**

A refrigerant system (10) having individual thermal expansion valves (26,45) for controlling refrigerant flow from a common compressor (12) and condenser (16) to separate remotely located evaporators (30,54) such as for vehicle front and rear seat passenger comfort. One of the remote thermal expansion valves (45) has a thermoelectric cooler (72) in heat conducting relationship with the fluid filled power capsule (62) of the valve (45). Upon energization of the thermoelectric cooler (72) the sensed temperature of the refrigerant returning through the valve (45) from the evaporator (54) to the compressor (12) is altered to cause the valve (45) to reduce refrigerant flow to the evaporator (54) to compensate for reduced refrigerant supply pressure due to flow through the other thermal expansion valve (26).

## Description

### CROSS-REFERENCE TO RELATED APPLICATIONS

Not Applicable

### STATEMENT REGARDING FEDERALLY SPONSORED RESEARCH OR DEVELOPMENT

Not Applicable

### MICROFICHE APPENDIX

Not Applicable

### BACKGROUND OF THE INVENTION

The present invention relates to refrigeration systems and particularly systems of the type in which a thermostatically controlled valve is employed for controlling expansion of liquid/vapor refrigerant from the relatively high pressure state of the liquid refrigerant discharging from the condenser to the reduced pressure state of the refrigerant for entry into an evaporator. Thermally responsive expansion valves are typically employed in refrigeration systems which must respond to rapid changes in thermal loading of the system as for example, automotive passenger compartment air conditioning systems.

As is known in such automotive air conditioning systems, the superheated refrigerant vapor discharging from the system evaporator is passed through the expansion valve block on its return path to the compressor inlet for heat exchange relationship in the valve with a closed capsule containing a fluid. The capsule is disposed such that expansion and contraction of the fluid acts against a diaphragm, movement of which is operative to effect movement of a valve member for controlling the refrigerant flow to the evaporator. Thus, the temperature of the superheated vapor which is correlated to saturation temperature for the refrigerant discharging from the evaporator is the basis for the system control. The system reacts to maintain a predetermined superheat while the evaporator discharge for a given thermal load by controlling the refrigerant flow through the evaporator. This arrangement has proven reliable and effective for automotive air conditioning systems employing a single evaporator.

However, recently it has been desired to provide plural evaporators in the vehicle passenger compartment operating from a common condenser discharge such as; for example, an evaporator disposed for cooling the air for the comfort of front seat passengers and a separate remotely located evaporator disposed for cooling air for rear seat passenger comfort. Where a front seat and rear seat evaporator are operated from a common condenser, the expansion valves and particularly the valve disposed for controlling flow to the rear seat evaporator cannot respond adequately because of the pressure variations in the refrigerant supply caused by the operation of the expansion valve for controlling flow to the front seat evaporator. In particular, where the pressure drops in the supply line to the thermal expansion valve for the rear seat evaporator, the thermal expansion valve reacts to maintain the desired superheat and thus permits maximum flow resulting in undesired cooling and/or evaporator freeze up.

Therefore, it has been desired to provide a way or means of controlling the flow of refrigerant to a secondary remotely located evaporator with a thermal expansion valve in a manner which can compensate for the divergence of flow and pressure changes due to the control of refrigerant flow to the primary evaporator.

### BRIEF SUMMARY OF THE INVENTION

The present invention provides a solution to the above described problem of controlling flow to a primary and secondary evaporator operating from a common compressor and condenser where each evaporator has a thermal expansion valve disposed for controlling flow at its inlet. The present invention provides a thermoelectric cooling unit in the thermal expansion valve controlling flow to the secondary evaporator in order to offset the sensed saturation temperature of the vapor discharging from the secondary evaporator thereby causing the thermal expansion valve to reduce the flow to the evaporator to prevent over cooling. The thermoelectric cooling unit of the present invention is disposed in heat conducting relationship with the liquid filled sensing capsule of the secondary thermal expansion valve which is of conventional construction thereby providing for a convenient "add-on" to an existing thermal expansion valve without requiring redesign or re-tooling of the valve for manufacture. The present invention effectively raises the sensed superheat of the evaporator discharge and effects reduced refrigerant flow and thus increases the air temperature of the blower air over the secondary evaporator.

### BRIEF DESCRIPTION OF THE DRAWINGS

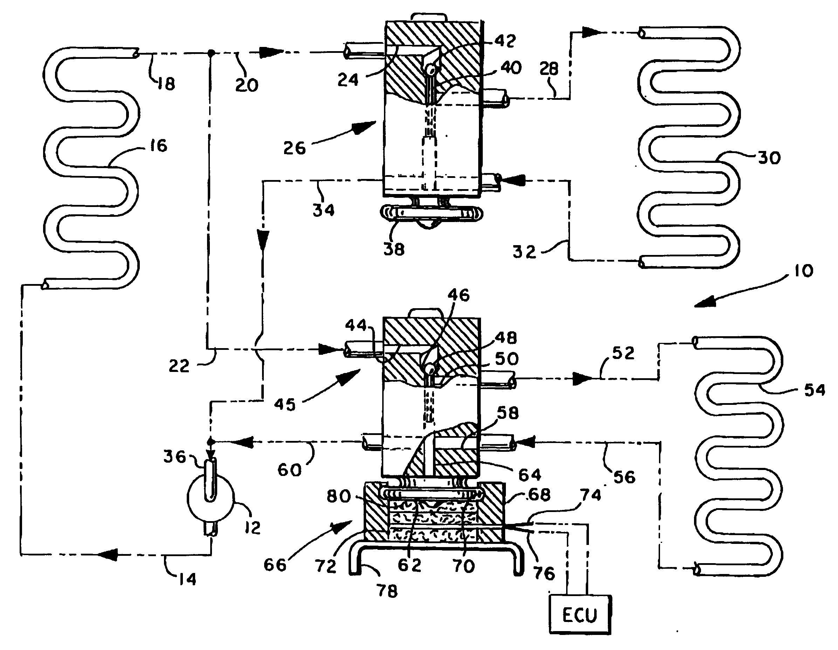

The sole Figure of the drawings is a pictorial schematic of a refrigeration or air conditioning system employing a primary and secondary evaporator operating from a common compressor and condenser.

### DETAILED DESCRIPTION OF THE INVENTION

Referring to the drawing, the system of the present invention is indicated generally at 10 and includes a refrigerant compressor 12, which in an automotive air conditioning system is typically belt driven from an unshown engine shaft in a manner well known in the art. Compressor 12 discharges refrigerant vapor at a relatively high pressure along line 14 to a condenser 16, typically disposed for heat transfer with free stream air, and which discharges liquefied refrigerant through conduit 18 to supply conduits 20, 22. Conduit 20 supplies the inlet 24 of a thermal expansion valve indicated generally at 26 which discharges refrigerant at a reduced pressure at its outlet through conduit 28 to a primary or front evaporator 30 which discharges superheated vapor through conduit 32 which is connected to pass through valve 26 and returns the refrigerant through conduit 34 to the compressor inlet 36. Valve 26 includes a thermally responsive sensing module 38 which responds to the temperature of the refrigerant flowing through the return passage and valve 26 to move an actuating rod 40 which in turn effects movement of a valve obturator 42 for controlling flow from inlet 24 to outlet conduit 28. It will be understood that the valve 26 is of known construction and operates in a conventional manner.

The conduit 22 supplies liquefied refrigerant at elevated pressure from condenser 16 to the inlet 44 of a valve indicated generally at 45 which supplies valve seat 46 on which is disposed a movable valve member 48 for controlling flow over the valve seat with a corresponding pressure drop to an outlet passage 50 of valve 45, which outlet is connected through conduit 52 to the inlet of a secondary or rear evaporator 54. The outlet of the evaporator 54 discharges through conduit 56 to a passage 58 through the body or block of valve 45; and, passage 58 is connected to conduit 60 which communicates with the inlet 36 of the compressor 12.

A liquid filled power capsule 62 is attached to the end of valve 45 and has attached thereto an operating rod 64 which extends through valve seat 46 to contact the valve member 48; and, upon expansion and contraction of the fluid within capsule 62, an unshown diaphragm is responsive therein for moving the rod 64. The rod 64 is preferably hollow and has the fluid fill of the capsule therein which is thus in heat conducting relationship with refrigerant flow in passage 58, as is known in the art of such thermal expansion valves. The construction and operation of the valve 45 is in accordance with practices well known in the art of refrigerant expansion valves.

The valve 45 of the present invention however additionally includes an electrically operated control unit indicated generally at 66 which is attached to the capsule 62 by an annular support member 68 having the periphery of the capsule received in a groove 70 formed on the inner periphery thereof. A thermoelectric cooling unit 72 is mounted adjacent the capsule 62 within the member 68 and has the electrical leads 74, 76 extending outwardly through the member 68. A retaining member 78 is received thereover; and, members 78 may comprise a heat sink if desired. The space between the thermoelectric cooler 72 and capsule 62, as denoted by reference numeral 80, is preferably filled with a heat conductive medium such as thermal grease to provide rapid heat conduction between the thermoelectric cooler 72 and capsule 62.

In operation, upon energization of the thermoelectric cooler 72 through leads 74, 76 from a suitable power source such as the electronic control unit (ECU) 82, the thermoelectric unit 72 effects cooling of capsule 62 below the temperature sensed by operating rod 64 of the evaporator discharge flow through passage 58 in such a manner as to offset the temperature effect of the fluid in passage 58 on the fluid fill of capsule 62 and causes the rod 64 to be moved downwardly to close valve 48 against seat 46. The resulting reduction in flow to evaporator 54 thus increases the superheat of the refrigerant in the evaporator and thus the temperature of the evaporator preventing undue cooling of the operator 54. In a conventional air conditioning system air forced over the evaporator 54 would he typically discharged to the passenger compartment for cooling the region and the vicinity of the evaporator 54. In an application where the evaporator 54 is disposed for cooling rear seat passengers in a vehicle, the effect of thermoelectric cooler 72 would be to prevent the valve 45 from opening fully due to the reduced pressure in the inlet conduit 22 caused by high flow requirements of the valve 26 for the evaporator 30.

The present invention thus provides a unique and novel cost effective way of modifying an existing thermal expansion valve to permit use of thermal evaporators from a common compressor and condenser without reoccurrence of over cooling in one of the evaporators.

Although the invention has hereinabove been described with respect to the illustrated embodiments, it will be understood that the invention is capable of modification and variation and is limited only by the following claims.

## Claims

1. An electrically controlled thermostatic refrigerant expansion valve comprising:
(a) a body having an inlet and outlet;
(b) a valve obturator moveable between a position restricting and a position permitting flow between said inlet and outlet;
(c) thermally responsive means including means defining a fluid filled chamber and a diaphragm moveably responsive to pressure in said chamber, and an actuator member for effecting said movement of said obturator member for effecting said movement of said obturator in response to movement of said diaphragm and,
(d) means disposed in thermally conductive relationship operable upon electrical energization for cooling said fluid filled chamber.

2. The expansion valve defined in claim 1, wherein said means for cooling comprises a thermoelectric device.

3. The expansion valve defined in claim 1, wherein said means defining a fluid filled chamber includes a capsule attached to said valve body; and, said means for cooling is attached to said capsule.

4. The expansion valve defined in claim 1, wherein said means defining a fluid filled chamber includes a capsule attached to said valve body; and, said means for cooling comprises a thermoelectric device attached to said capsule.

5. The expansion valve defined in claim 1, wherein said cooling means disposed in thermally conductive relationship includes thermally responsive grease.

6. A method of controlling refrigerant in a closed loop recirculating cooling system comprising:
(a) compressing vaporized refrigerant and flowing same through a condenser;
(b) disposing an expansion valve for receiving at its inlet pressurized flow from the condenser and discharging flow at a reduced pressure to an evaporator;
(c) disposing a fluid filled sensing capsule on said valve and sensing the temperature of the refrigerant flowing from the evaporator and moving an obturator in the expansion valve in response to said sensed temperature and controlling flow to the evaporator; and, cooling said fluid filled capsule and offsetting said sensed temperature by a predetermined amount.

7. The method defined in claim 6, wherein said step of electrically cooling includes disposing a thermoelectric cooler on said capsule and electrically energizing the cooler.
